## Europäisches Patentamt

## European Patent Office

## Office européen des brevets

(11) Veröffentlichungsnummer: **0 205 854**
**B1**

(12) **EUROPÄISCHE PATENTSCHRIFT**

(45) Veröffentlichungstag der Patentschrift:
**08.08.90**

(21) Anmeldenummer: **86106279.2**

(22) Anmeldetag: **07.05.86**

(51) Int. Cl.⁵: **A01D 90/04**

(54) Fördervorrichtung für landwirtschaftliche Ladewagen.

(30) Priorität: **03.06.85 DE 3519776**

(43) Veröffentlichungstag der Anmeldung:
**30.12.86 Patentblatt 86/52**

(45) Bekanntmachung des Hinweises auf die Patenterteilung:
**08.08.90 Patentblatt 90/32**

(84) Benannte Vertragsstaaten:
**AT CH FR GB IT LI NL**

(56) Entgegenhaltungen:
**EP-A- 0 074 533**
**DE-A- 2 818 850**
**DE-A- 3 222 934**

(73) Patentinhaber: **GREENLAND GMBH & CO. KG,**
**Erwin-Dietrich-Platz 1, D-7702 Gottmadingen(DE)**

(72) Erfinder: **Schweizer, Robert, Feldbergstrasse 14,**
**D-7701 Hilzingen-Riedheim(DE)**
Erfinder: **Silber, Wilhelm, Dipl.-Ing., Petersburg 21,**
**D-7702 Gottmadingen-Randegg(DE)**

(74) Vertreter: **Patentanwälte Grünecker, Kinkeldey,**
**Stockmair & Partner, Maximilianstrasse 58,**
**D-8000 München 22(DE)**

## Beschreibung

Die Erfindung betrifft eine Fördervorrichtung der im Oberbegriff des Patentanspruchs 1 angegebenen Art.

Bei einer solchen aus der EP-A1 0 074 533 bekannten Fördervorrichtung greift jeder Lenker an einem Ende eines um die feststehende Achse verschwenkbaren Hebels an, der entweder zu einer manuellen Betätigung mit einem Handhebel verbunden ist, oder zu einer ferngesteuerten Betätigung hydraulisch verschwenkbar ist, um die Unterwand zwischen der Normalstellung und der unteren Endlage hin- und herzubewegen. Bei Auftreten einer Überlastung im Förderkanal wird mittels der Betätigungsvorrichtung der Hebel verschwenkt, bis über den Lenker die Unterwand soweit abgesenkt ist, daß die Fördervorrichtung die Überlastung beseitigen kann. Danach wird durch Zurückschwenken des Hebels über den Lenker die Unterwand wieder in die Normalstellung bewegt, in der die Förderzinken mit den Schneidmessern ordnungsgemäß zusammenarbeiten. Allerdings muß die Bedienungsperson bei manueller Betätigung zweimal den Schlepper verlassen, um die Überlastung zu beseitigen und die Fördervorrichtung wieder in die funktionsgerechte Lage zu bringen. Für den Fall, daß die Betätigungsvorrichtung hydraulisch arbeitet, läßt sich dieser Vorgang zwar vom Schleppersitz aus durchführen. Jedoch ist eine zusätzliche Hydraulikfunktion am Schlepper notwendig und läßt sich ein gewisser Zeitverlust für diese Arbeit nicht vermeiden.

Bei einer aus der DE-A1 3 222 934 bekannten Schneidvorrichtung im Förderschacht eines Ladewagens lassen sich die Schneidmesser mit einem sie tragenden Rahmen von der Unterwand des Förderkanals nach unten schwenken, wenn eine Überlastung des Förderkanals auftritt. Der die Schneidmesser halternde Rahmen ist über einen federbelasteten Hebelmechanismus verriegelt. Der Hebelmechanismus gibt nach, wenn an den Schneidmessern eine bestimmte Belastung wirkt. Überlastungen des Förderkanals lassen sich nicht zufriedenstellend beseitigen, weil allein durch das teilweise Wegschwenken der Schneidmesser die Verstopfung nur langsam oder überhaupt nicht selbsttätig behoben wird.

Bei einer aus der DE-A1 2 818 850 bekannten Schneidvorrichtung für landwirtschaftliche Maschinen sind die schwenkbar gelagerten Schneidmesser durch Federelemente in ihre Arbeitsposition gedrückt. Tritt eine Überlastung auf, die an den Schneidmessern einen bestimmten Drehmomentwert erzeugt, dann klappt das belastete Schneidmesser selbsttätig in die Unterwand des Förderkanals, um nach Absinken des wirksamen Drehmoments wieder selbsttätig zurückzukehren. Mit diesem Prinzip lassen sich Verstopfungen im Förderkanal nicht in zufriedenstellendem Maß beseitigen, weil in der Regel allein der verringerte Durchgangswiderstand aufgrund teilweise weggeschwenkter Schneidmesser nicht für die selbsttätige Behebung der Verstopfung ausreicht. Der Erfindung liegt die Aufgabe zugrunde, eine Fördervorrichtung der eingangs genannten Art dahingehend zu verbessern, daß auftretende Verstopfungen des Förderkanals automatisch festgestellt und beseitigt werden, so daß die Bedienungsperson den Schlepper nicht mehr verlassen muß und die Stillstandszeit des Ladewagens zur Beseitigung der Verstopfung erheblich verkürzt wird.

Die gestellte Aufgabe wird erfindungsgemäß mit den im kennzeichnenden Teil des Patentanspruchs 1 angegebenen Merkmalen gelöst. Bei dieser Ausbildung wird die Verstopfung an einer kritischen Stelle des Förderkanals durch die Meßanordnung festgestellt und daraufhin die Unterwand zum Verschwenken in die abgesenkte Endlage freigegeben. Diese Querschnittsvergrößerung des Förderkanals erleichtert das selbsttätige Beseitigen der Verstopfung. Ist der Überlastungszustand aufgehoben, dann wird durch das Federelement die Unterwand wieder selbsttätig in die Normalstellung gezogen, so daß die Fördervorrichtung wieder ordnungsgemäß arbeitet. Die Bedienungsperson braucht hierauf keinen Einfluß zu nehmen und deshalb nur wenig Sorgfalt auf die ordnungsgemäße Funktion der Fördervorrichtung zu richten. Die Erfindung ermöglicht also eine vollautomatische Beseitigung von Verstopfungen, wobei die Stillstandszeiten des Ladewagens wegen solcher Verstopfungen auf das kleinstmögliche Maß reduziert sind.

Vorteilhafte Ausführungsformen gehen aus den Unteransprüchen hervor.

Im folgenden wird die Erfindung anhand der Zeichnung näher erläutert, in der zwei vorteilhafte Ausführungsbeispiele dargestellt sind; es zeigen:

Fig. 1 schematisch eine Seitenansicht einer Fördervorrichtung in Normalstellung;

Fig. 2 schematisch eine Seitenansicht einer Fördervorrichtung in Reinigungsstellung;

Fig. 3 ein zweites Ausführungsbeispiel einer Hebelanordnung in Normalstellung;

Fig. 4 diese Hebelanordnung in Reinigungsstellung;

Fig. 5 die Anordnung eines elektrischen Schalters an dem Kipphebel in Normalstellung; und

Fig. 6 die elektrischen Schalter am Kipphebel in Reinigungsstellung.

In den Figuren ist mit 1 eine Pick-up-Trommel bezeichnet zur Aufnahme des auf dem Boden liegenden nicht dargestellten, geschnittenen Halmgutes, das dem Laderaum 4 eines angedeuteten Ladewagens zugeführt werden soll. Der Ladewagen ist mit einem sogenannten Kratzboden 5 versehen, an dem sich eine mit Beförderungsteilen 7 versehene umlaufende Kette 6 befindet, um das in den Laderaum 4 eingegebene Halmgut zum hinteren Ende des Ladewagens zu befördern.

An die Pick-up-Trommel 1 schließt sich der Förderkanal an, dessen oberes Ende durch eine mit entsprechenden Aussparungen versehene Oberwand 3 gebildet wird, durch die Förderzinken 11 hindurchgreifen, die von einer Fördertrommel 10 getragen werden und sich in Richtung des Pfeiles F bewegen. Die Fördertrommel 10 wird von einem Antrieb 8 über die eine mit dem Schlepper verbundene Welle 7 angetrieben, und zwar über eine Antriebskette, deren unteres Zugtrum mit 9 bezeichnet ist. Die Förderzinken 11 wirken mit Schneidmessern 12 zusammen, die an der Unterwand 2 des Förderkanals schwenkbar angeordnet sind und kämmen mit diesen, so daß das den Förderkanal in Richtung des Laderaums 4 durchsetzende Halmgut in Streifen einstellbarer Breite geschnitten werden kann. Zu diesem Zweck sind die Schneidmesser 12 an Achsen 13 drehbar gelagert.

Die Unterwand 2 des Förderkanals ist an ihrem der Pick-up-Trommel 1 benachbarten Ende an einer waagrechten Achse 14 drehbar gelagert. Um auftretende Verstopfungen im Förderkanal zu entfernen kann demzufolge das obere, dem Ladewagen benachbarte Ende der Unterwand 2 in Richtung zum Boden abgesenkt werden, so daß die Schneidmesser 12 zum größten Teil aus dem Förderkanal entfernt werden.

Dieser Vorgang kann nun automatisch durchgeführt werden. Zu diesem Zweck ist das obere Ende der Unterwand 2 mit einem Lenker 15 verbunden, der wiederum mit dem oberen Ende eines Kipphebels 16 verbunden ist, der um eine Achse 17 drehbar gelagert ist. Die Achse 17 ist am Ladewagengehäuse befestigt.

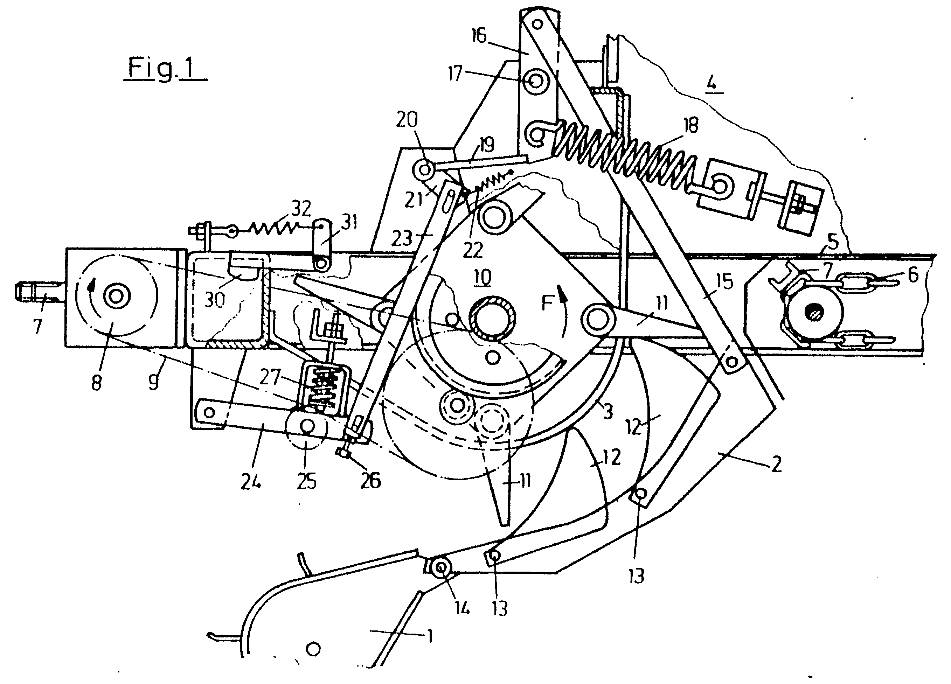

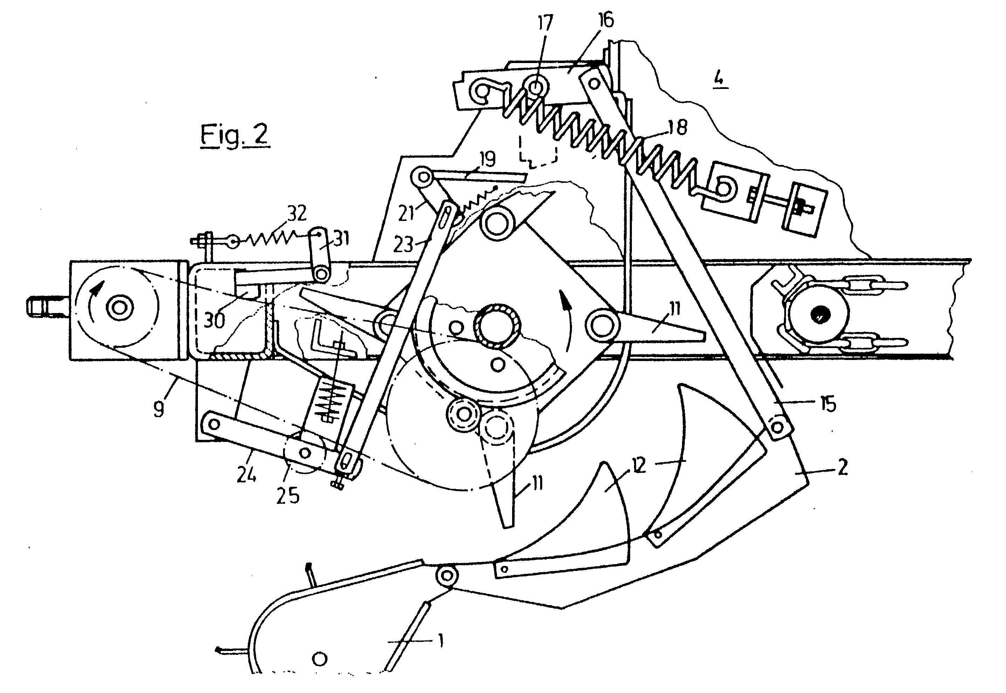

Das freie Ende des Kipphebels 16 ist mit einer Spiralfeder 18 verbunden, die ebenfalls am Ladewagengehäuse befestigt ist und deren Federkraft einstellbar ist. Ferner weist bei einem ersten Ausführungsbeispiel (Fig. 1, 2) der Kipphebel an seinem unteren Ende eine Aussparung auf, so daß er als Schaltklinke ausgebildet ist, in die ein Endhebel 19 eines Hebelgestänges eingreift. Der Endhebel 19 ist fest mit einem Zwischenhebel 21 verbunden, wobei beide Hebel um eine gemeinsame Achse 20 drehbar gelagert sind und der Zwischenhebel 21 von einer Feder 22 in Richtung der Verriegelungsstellung des Kipphebels 16 beaufschlagt wird. Mittels eines Langloches zur Ausgleichung eines gewissen Spiels ist der Zwischenhebel 21 über einen Längshebel 23 mit einem Führungshebel 24 verbunden, dessen anderes Ende an einer Lasche am Ladewagengehäuse drehbar gelagert ist. Der Führungshebel 24 trägt die am Zugtrum 9 der Förderkette für die Fördertrommel 10 anliegende Rolle 25. Die Kraft, mit der die Rolle 25 auf das Zugtrum 9 wirkt, kann durch ein Federteil 27 eingestellt werden, so daß das Zugtrum um einen gewissen Weg durchgebogen wird.

Eine einstellbare Vorspannung auf das obere Teil der Antriebskette kann durch eine Anpreßwalze 30 erfolgen, die mit einem drehbar gelagerten Hebel 31 verbunden ist, der unter der einstellbaren Kraft einer Feder 32 steht.

Während in Fig. 1 die Normalstellung der Fördervorrichtung dargestellt ist, zeigt Fig. 2 die Reinigungsstellung, bei der also die Bodenwand 2 des Förderkanals in Richtung zum Boden hin abgesenkt worden ist. Dies erfolgt dadurch, daß durch eine auftretende Verstopfung im Förderkanal die auftretende Belastung der Fördervorrichtung das Zugtrum 9 die in Fig. 2 dargestellte gestreckte Lage einnimmt und dadurch die Rolle 25 samt dem zugehörigen Führungshebel 24 in Richtung zur Pick-up-Trommel 1 verschoben werden. Dadurch erfolgt eine Verschiebung des Längshebels 23 nach unten, sowie ebenfalls eine Verschwenkung der beiden Hebel 21, 19, wodurch der Kipphebel 16 entriegelt wird. Aufgrund der hohen im Förderkanal herrschenden Kräfte kann der Kipphebel 16 um seine Achse 17 gegen die Wirkung der Feder 18 verschwenken und der Lenker 15 die Bodenwand 2 absenken. Dadurch gelangen die Schneidmesser 12 größtenteils außer Eingriff mit den Förderzinken 11, und die Fördervorrichtung kann mit geringerer Drehmomentbelastung weiter fördern.

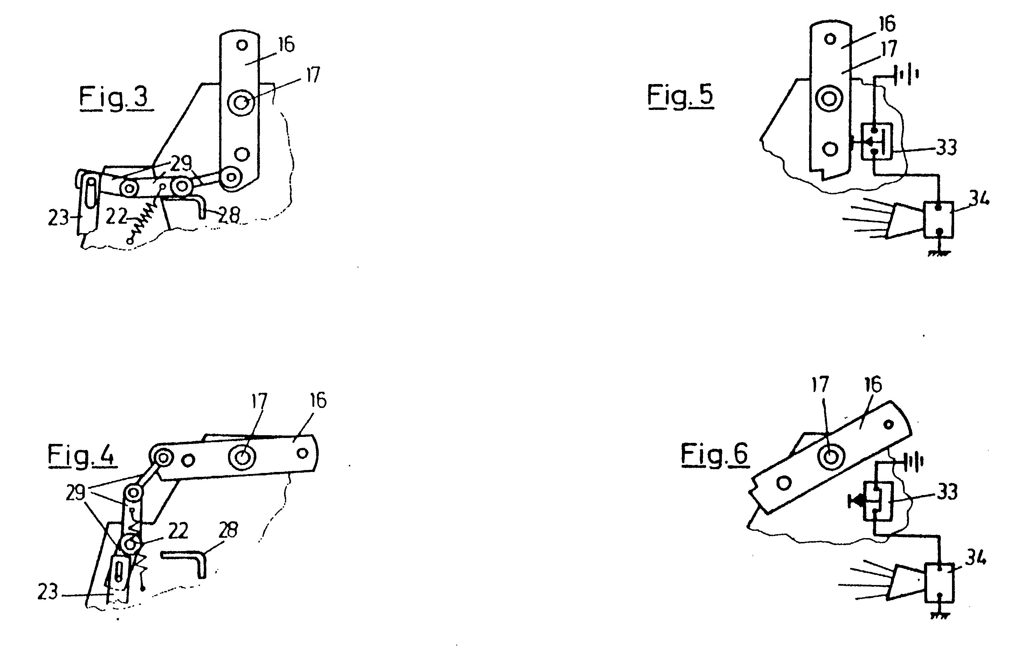

Wie aus Fig. 5 und 6 hervorgeht kann der Kipphebel 16 mit einem elektrischen Schalter 33 verbunden sein zur Betätigung einer Alarmeinrichtung 34, die sich z. B. in der Nähe der Bedienungsperson in dem Schlepper befindet. Solange der Kipphebel 16 in seiner Normalstellung ist, wird kein Signal abgegeben, während bei Reinigungsstellung des Kipphebels 16 ein Alarmsignal ertönt. Sowie die Bedienungsperson von der Überlastauslösung erfährt, kann durch ein kurzzeitiges Anhaltes des Schleppers und damit des Ladewagens die Halmgutzufuhr zum Förderkanal unterbrochen worden, wobei der Förderkanal durch die weiterlaufenden Förderzinken 11 vollständig freigeräumt wird. Durch die am Kipphebel 16 angeordneten Spiralfedern 18 wird die Unterwand 2 des Förderkanals nach dem Freiräumen durch die Förderzinken 11 automatisch wieder in die Normalstellung hochgezogen, wobei auch aufgrund der Feder 22, die den Zwischenhebel 21 und den Endhebel 19 entsprechend beaufschlagt, eine automatische Verriegelung des Kipphebels 16 erfolgt. Die Bedienungsperson kann nunmehr ihre Fahrt fortsetzen.

Bei einem zweiten in den Fig. 3 und 4 dargestellten Ausführungsbeispiel wird der Kipphebel 16 nicht als Schaltklinke ausgebildet, sondern als ein Hebel, desses unteres, dem Anlenkpunkt des Lenkers 15 entgegengesetztes Ende als Kniehebelgelenkanordnung 29 ausgebildet ist. Das Endstück der Kniehebelgelenkanordnung ist dabei drehbar mit dem Kipphebel 16 verbunden, wobei sich das Mittelstück der Kniehebelgelenkanordnung (Fig. 3) auf einen am Ladewagengehäuse angeordneten Anschlag 28 abstützt. Ferner steht dieses Mittelstück unter der Einwirkung einer Feder 22, die den Kipphebel 16 in Richtung seiner Normalstellung beaufschlagt.

Im Falle von auftretenden Verstopfungen verdreht der Längshebel 23 das untere Teil der Kniehebelgelenkanordnung 29 und verschwenkt dadurch das Mittelstück und das Endstück, wodurch der Kipphebel 16 in die in Fig. 4 gezeigte Reinigungsstellung gelangt. Auch hier erfolgt nach Beendigung der Freiräumung des Förderkanals eine automatische Rückstellung der Unterwand 2 in die in Fig. 1 gezeigte Normalstellung.

Eine andere Möglichkeit der Drehmomentfeststellung besteht darin, das Überlastmoment an der Rutschkupplung abzunehmen. In diesem Fall entfällt die Rolle 25 und das mit ihr verbundene Gestänge. Anstelle der beiden Lenker 15, die rechts und links des Förderkanals vorgesehen sind zur Absenkung der Unterwand 2, können auch längenverstellbare Hubseile vorgesehen werden, um eine bestimmte obere Endlage der Unterwand 2 einzustellen. Bei Verwendung von Hubseilen wird der Vorteil erzielt, daß die Unterwand bis auf den Erdboden abgesenkt werden kann, um so die Schleifmesser 12 nachschleifen zu können.

Mit der vorliegenden erfindungsgemäßen Fördervorrichtung ist eine erhebliche Leistungssteigerung und damit ein Zeitgewinn möglich, da der Ladewagen näher an seine Leistungsgrenze gebracht werden kann, d. h. an diejenige Grenze, bei der erfahrungsgemäß Verstopfungen aufzutreten pflegen. Der technische Aufwand für die erfindungsgemäße Fördervorrichtung ist geringer als bei einer hydraulischen Betätigung zur Absenkung der Unterwand des Förderkanals. Ein weiterer Vorteil kann darin gesehen werden, daß die bisher verwendete teuere und störanfällige Rutschkupplung durch eine einfache Schersicherung ersetzt werden, da die weitaus überwiegenden Fälle von Antriebsblockierungen durch die erfindungsgemäße Fördervorrichtung vermieden werden können.

## Patentansprüche

1. Fördervorrichtung für landwirtschaftliche Ladewagen, bestehend aus einer Pick-up-Trommel (1) zum Aufnehmen des Halmgutes, einem sich daran anschließenden Förderkanal, der in den Laderaum (4) des Ladewagens mündet, wobei der Förderkanal eine feststehende, vom Förderzinken (11) durchsetzte Oberwand (3) und eine relativ zur Oberwand (3) zwischen einer oberen Normalstellung und einer unteren Endlage verschwenkbare, in der Nähe der Pick-up-Trommel an einer waagrechten Achse (14) gelagerte, von einer Vielzahl von Schneidmessern (12) durchsetzte Unterwand (2) aufweist, deren dem Laderaum benachbartes Ende beidseits des Förderkanals an je einem Lenker (15) angelenkt ist, deren jeder an einem Ende eines an einer feststehenden Achse (17) gelagerten Hebels angelenkt ist, der bei Überlastung des Föderkanals aus einer die obere Normalstellung der Unterwand (2) definierenden Sperrstellung in eine zweite, die untere Endlage der Unterwand (2) definierende Position schwenkbar ist, und mit einer am anderen Ende des Hebels angreifenden Betätigungsvorrichtung, dadurch gekennzeichnet, daß der Hebel ein zweiarmiger, in etwa in seiner Mitte an der Achse (17) drehbarer Kipphebel (16) ist, daß die Betätigungsvorrichtung eine Meßanordnung (25) zur Feststellung der Belastung des Förderkanals durch das geförderte Halmgut aufweist, die über ein Hebelgestänge und einen Endhebel (19) auf das andere Ende des Kipphebels (16) derart einwirkt, daß der am Kipphebel (16) in dessen Sperrstellung angreifende Endhebel (19) bei Überlastung des Förderkanals selbsttätig den Kipphebel (16) freigibt, und daß am Kipphebel (16) nahe dessen anderem Ende ein Federelement (18) angreift, das den Kipphebel (16) in Richtung auf seine Sperrstellung beaufschlagt, derart, daß bei in die untere Endlage geschwenkter Unterwand (2) nach Beseitigung der Überlastung des Förderkanals das Federelement (18) über den Kipphebel (16) und den Lenker (15) die Unterwand (2) wieder selbsttätig in die obere Normalstellung verschwenkt.

2. Fördervorrichtung nach Anspruch 1, dadurch gekennzeichnet, daß der Kipphebel (16) als Schaltklinke ausgebildet ist, die am anderen, mit dem Endhebel (19) zusammenarbeitenden Ende eine Aussparung aufweist, in die der Endhebel (19) in der Sperrstellung des Kipphebels (16) eingreift und den Kipphebel feststellt.

3. Fördervorrichtung nach Anspruch 1, dadurch gekennzeichnet, daß das Federelement (18) am Ladewagen befestigt ist und in seiner Federstärke auf das Gewicht der Unterwand (2) und des daraufliegenden Halmgutes einstellbar ist.

4. Fördervorrichtung nach Anspruch 1, dadurch gekennzeichnet, daß das Hebelgestänge einen mit dem Endhebel (19) verbundenen Zwischenhebel (21) aufweist, daß die beiden Hebel (19, 21) um eine gemeinsame Achse (20) drehbar sind, und daß der Zwischenhebel (21) durch einen Längshebel (23) mit einem Führungshebel (24) verbunden ist.

5. Fördervorrichtung nach den Ansprüchen 1 bis 4, dadurch gekennzeichnet, daß der Führungshebel (24) die Meßanordnung (25) trägt, die eine an einem Zugtrum einer Antriebskette (9) einer Fördertrommel (10) angeordnete Rolle (25) aufweist, deren Andruckkraft durch ein veränderbares Federteil (27) einstellbar ist.

6. Fördervorrichtung nach Anspruch 5, dadurch gekennzeichnet, daß das obere Trum der Antriebskette (9) der Fördertrommel (10) durch ein federbelastetes Anpreßelement, vorzugsweise eine Anpreßwalze (30), beaufschlagt ist.

7. Fördervorrichtung nach den Ansprüchen 4 und 5, dadurch gekennzeichnet, daß der Führungshebel an seinem freien Ende an einer Lasche des Ladewagenaufbaus drehbar befestigt ist.

8. Fördervorrichtung nach Anspruch 4, dadurch gekennzeichnet, daß der Zwischenhebel (21) und der Endhebel (19) unter der Wirkung einer Feder (22) stehen, die diese Hebel in Richtung auf die Sperrstellung des Kipphebels (16) beaufschlagt.

9. Fördervorrichtung nach Anspruch 1, dadurch gekennzeichnet, daß der Kipphebel (16) mit einem Längshebel (23) des Hebelgestänges durch eine den Endhebel aufweisende Kniegelenkhebelanordnung (29) verbunden ist.

10. Fördervorrichtung nach Anspruch 9, dadurch gekennzeichnet, daß am Ladewagengehäuse ein Anschlag (28) vorgesehen ist, an dem die Kniegelenkhebelanordnung (29) in der Sperrstellung des Kipphebels (16) abstützbar ist.

11. Fördervorrichtung nach Anspruch 10, dadurch gekennzeichnet, daß ein Mittelteil der Kniegelenkhebelanordnung unter der Einwirkung einer Feder (22) steht, die es in Richtung der Sperrstellung des Kipphebels (16) beaufschlagt.

12. Fördervorrichtung nach Anspruch 1, dadurch gekennzeichnet, daß die vom Kipphebel (16) gebildete Schaltklinke zur Betätigung einer Alarmeinrichtung (34) mit einem elektrischen Schalter (33) verbunden ist.

## Claims

1. Conveyor device for agricultural loader wagons, including a pick-up drum (1) for receiving the straw material, a conveyor duct which communicates with said drum and extends into the storage chamber (4) of the loader wagon, wherein the conveyor duct includes a stationary upper wall (3), which has the conveyor tine (11) extending therethrough, and a lower wall (2), which is pivotable relative to the upper wall (3) between an upper normal position and a lower end position, said lower wall being mounted in the vicinity of the pick-up drum on a horizontal axle (14) and having a plurality of cutting blades (12) extending therethrough, the end of said lower wall which lies adjacent the storage chamber being pivotally mounted at each side of the conveyor duct on a respective control rod (15), each control rod being pivotally mounted on an end of a lever which is mounted on a stationary axle (17) and, if the conveyor duct becomes overloaded, is pivotable from a locking position, which defines the upper normal position of the lower wall (2), into a second position which defines the lower end position of the lower wall (2), and including an actuating device, which co-operates with the other end of the lever, characterised in that the lever is a two-armed tilting lever (16), which is pivotable substantially at its centre on the axle (17), in that the actuating device includes a measuring arrangement (25) for determining the load of straw material being conveyed through the conveyor duct, which measuring arrangement acts on the other end of the tilting lever (16), via a lever rod system and an end lever (19), in such a manner that the end lever (19), which engages with the tilting lever (16) in its locking position, releases the tilting lever (16) automatically if the conveyor duct becomes overloaded, and in that a resilient member (18) engages with the tilting lever (16) close to its other end, which resilient member actuates the tilting lever (16) in the direction of its locking direction in such a manner that, when the lower wall (2) is pivoted into the lower end position, the resilient member (18) again automatically pivots the lower wall (2) into the upper normal position, via the tilting lever (16) and the control rod (15), after the excess load has been removed from the conveyor duct.

2. Conveyor device according to claim 1, characterised in that the tilting lever (16) is in the form of a pawl, which is provided with a recess in the other end which co-operates with the end lever (19), the end lever (19) engaging in said recess when the tilting lever is in its locking position and securing the tilting lever in position.

3. Conveyor device according to claim 1, characterised in that the resilient member (18) is secured on the loader wagon and is adjustable, in respect of its spring intensity, to the weight of the lower wall (2) and of the straw material situated thereon.

4. Conveyor device according to claim 1, characterised in that the lever rod system includes an intermediate lever (21), which is connected to the end lever (19), in that the two levers (19, 21) are rotatable about a common axle (20), and in that the intermediate lever (21) is connected to a guide lever (24) by means of a longitudinal lever (23).

5. Conveyor device according to claims 1 to 4, characterised in that the guide lever (24) carries the measuring arrangement (25), which includes a roller (25) disposed on a tensile strand of a drive chain (9) of a conveyor drum (10), the pressure force of said roller being adjustable by means of a variable resilient member (27).

6. Conveyor device according to claim 5, characterised in that the upper strand of the drive chain (9) of the conveyor drum (10) is acted upon by a spring-loaded pressure element, preferably a pressure roller (30).

7. Conveyor device according to claims 4 and 5, characterised in that the guide lever is rotatably secured at its free end to a lug of the loader wagon structure.

8. Conveyor device according to claim 4, characterised in that the intermediate lever (21) and the end lever (19) are actuated by a spring (22), which acts upon these levers in the direction of the locking position of the tilting lever (16).

9. Conveyor device according to claim 1, characterised in that the tilting lever (16) is connected to a longitudinal lever (23) of the lever rod system by a toggle-joint lever arrangement (29), which includes the end lever.

10. Conveyor device according to claim 9, characterised in that a stop member (28) is provided on the loader wagon housing, and the toggle-joint lever arrangement (29) is supportable on said stop member when the tilting lever (16) is in its locking position.

11. Conveyor device according to claim 10, characterised in that a central portion of the toggle-joint lever arrangement is actuated by a spring (22), which acts thereon in the direction of the locking position of the tilting lever (16).

12. Conveyor device according to claim 1, characterised in that the pawl, formed by the tilting lever (16), is connected to an electric switch (33) for the actuation of an alarm system (34).

## Revendications

1. Dispositif de transport pour remorques agricoles chargeuses se composant d'un tambour de ramassage (1) pour ramasser la récolte,.d'un canal de transport s'y raccordant, qui débouche dans l'espace de chargement (4) de la chargeuse, le canal de transport présentant une paroi supérieure stationnaire (3) traversée de pointes (11) de transport et une paroi inférieure (2) pouvant pivoter relativement à la paroi supérieure (3) entre une position normale supérieure et une position extrême inférieure, logée sur un axe horizontal (14) à proximité du tambour de ramassage, et traversée d'un certain nombre de lames de coupe (12), dont l'extrémité proche de l'espace de chargement est raccordée des deux côtés du canal de transport à un bras oscillant (15) dont chacun est articulé à une extrémité d'un levier logé sur un axe stationnaire (17) qui, lors d'une surcharge du canal de transport, peut pivoter d'une positon de blocage définissant la position normale supérieure de la paroi inférieure (2) à une seconde position définissant la position extrême inférieure de la paroi inférieure (2) et avec un dispositif d'actionnement agissant à l'autre extrémité du levier, caractérisé en ce que le levier est un levier oscillant (16) à deux bras, rotatif à peu près en son milieu sur l'axe (17), en ce que le dispositif d'actionnement présente un système de mesure (25) pour établir la charge du canal de transport par la récolte transportée, qui agit, par l'intermédiaire d'une tringlerie à leviers et d'un levier extrême (19), sur l'autre extrémité du levier oscillant (16) de manière que le levier extrême (19) agissant sur le levier oscillant (16) à sa position de blocage libère automatiquement, lors d'une surcharge du canal de transport, le levier oscillant (16), et en ce que, sur le levier oscillant (16), un élément à ressort (18) agit à proximité de son autre extrémité, qui sollicite le levier oscillant (16) dans la direction de sa position de blocage de manière que lorsque la paroi inférieure (2) est pivotée à sa position extrême inférieure, après avoir supprimé la surcharge du canal de transport, l'élément à ressort (18) repivote automatiquement la paroi inférieure (2) à sa position normale supérieure, au moyen du levier oscillant (16) et du bras oscillant (15).

2. Dispositif de transport selon la revendication 1, caractérisé en ce que le levier oscillant (16) est configuré comme un cliquet, qui présente un évidement à son autre extrémité, coopérant avec le levier extrême (19), dans lequel s'engage le levier extrême (19) à la position de blocage du levier oscillant (16) et maintient le levier oscillant (16) stationnaire.

3. Dispositif de transport selon la revendication 1, caractérisé en ce que l'élément à ressort (18) est fixé sur la chargeuse et peut être ajusté, par sa force de ressort, selon le poids de la paroi inférieure (2) et de la récolte qui s'y trouve.

4. Dispositif de transport selon la revendication 1, caractérisé en ce que la tringlerie à leviers présente un levier intermédiaire (21) relié au levier extrême (19), en ce que les deux leviers (19, 21) sont rotatifs autour d'un axe commun (20) et en ce que le levier intermédiaire (21) est relié par un levier longitudinal (23) à un levier de guidage (24).

5. Dispositif de transport selon l'une quelconque des revendications 1 à 4, caractérisé en ce que le levier de guidage (24) porte le système de mesure (25) qui présente un galet (25) agencé sur un brin de traction d'une chaîne d'entraînement (9) d'un tambour de transport (10), dont la force de pression peut être ajustée par une partie modifiable de ressort (27).

6. Dispositif de transport selon la revendication 5, caractérisé en ce que le brin supérieur de la chaîne d'entraînement (9) du tambour d'alimentation (10) est sollicité par un élément de pression chargé par ressort, avantageusement un cylindre de pression (30).

7. Dispositif de transport selon les revendications 4 et 5, caractérisé en ce que le levier de guidage est fixé rotatif à son extrémité libre sur une attache de la structure de la chargeuse.

8. Dispositif de transport selon la revendication 4, caractérisé en ce que le levier intermédiaire (21) et le levier extrême (19) se trouvent sous l'effet d'un ressort (22) qui sollicite ces leviers dans la direction de la position de blocage du levier oscillant (16).

9. Dispositif de transport selon la revendication 1, caractérisé en ce que le levier oscillant (16) est relié à un levier longitudinal (23) de la tringlerie à leviers par un système à articulation de genouillère (29) présentant le levier extrême.

10. Dispositif de transport selon la revendication 9, caractérisé en ce qu'une butée (28) est prévue sur le corps de la chargeuse, sur laquelle peut s'appuyer l'agencement à articulation de genouillère (29) à la position de blocage du levier oscillant (16).

11. Dispositif de transport selon la revendication 10, caractérisé en ce qu'une partie médiane de l'agencement à articulation de genouillère se trouve sous l'effet d'un ressort (22) qui la sollicite dans la direction de la position de blocage du levier oscillant (16).

12. Dispositif de transport selon la revendication 1, caractérisé en ce que le cliquet formé par le levier oscillant (16) est relié à un commutateur électrique (23) pour l'actionnement d'un système d'alarme (33).

Fig.1

Fig. 2

Fig. 5

Fig. 6

Fig. 3

Fig. 4